# EUROPEAN PATENT APPLICATION

(11) **EP 4 796 239 A1**
(43) Date of publication of application: **26.08.2026**
(21) Application number: 24892870.7
(22) Date of filing: 30.07.2024
(51) Int. Cl.: B21D 1/02

(54) **ELECTRODE SHEET FLATTENING DEVICE AND ELECTRODE SHEET COATING DEVICE**

(30) Priority: 24.11.2023 CN 202311580211
(71) Applicant: Contemporary Amperex Technology Co., Limited, Ningde, Fujian 352100 (CN)
(72) Inventor: QU, Jiangjiang, Ningde, Fujian 352100 (CN); LI, Diwu, Fujian 352100 (CN); ZHENG, Tuo, Ningde, Fujian 352100 (CN); ZHANG, Ling, Ningde, Fujian 352100 (CN)
(74) Representative: Kraus & Lederer PartGmbB
(86) International application number: PCT/CN2024/108623
(87) International publication number: WO 2025/107706

(57) **Abstract**

An electrode sheet flattening device and an electrode sheet coating device. The electrode sheet flattening device comprises: a pressing roller (40) capable of being pressed on an electrode sheet (50) and capable of rotating along with the displacement of the electrode sheet, and a damping device (100) comprising a first transmission member (10) and a damping assembly (20), wherein the first transmission member can rotate along with the pressing roller, the damping assembly is arranged beside the first transmission member, and the damping assembly can apply resistance to the first transmission member. The electrode sheet flattening device can reduce the rotating speed of the pressing roller and adjust the component force in a direction perpendicular to the electrode sheet, thereby alleviating the problems of wrinkles and skewing of electrode sheets, and improving the yield rate of the electrode sheets.

## Description

The present application claims priority to a Chinese patent application No. 202311580211.2 filed to the National Intellectual Property Administration on November 24, 2023 and entitled "ELECTRODE PLATE FLATTENING DEVICE AND ELECTRODE PLATE COATING DEVICE", which is herein incorporated by reference in its entirety.

### TECHNICAL FIELD

The present application relates to the technical field of power batteries, and in particular to an electrode plate flattening device and an electrode plate coating device.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor regarding the development thereof.

In the structure of a battery, an electrode plate is an important component. An active material needs to be coated onto the electrode plate. However, during the process of coating the active material onto the electrode plate, the electrode plate is prone to skewing, wrinkling, and the like situations, thereby easily affecting the yield of the electrode plate.

### SUMMARY OF THE INVENTION

In view of the aforementioned problems, the present application provides an electrode plate flattening device and an electrode plate coating device, which alleviate the problems of an electrode plate being prone to skewing and wrinkling.

In a first aspect, an embodiment of the present application provides an electrode plate flattening device, including:
a pressing roller capable of being pressed on an electrode plate and capable of rotating along with the displacement of the electrode plate; and
a damping device including a first transmission member and a damping assembly;
where the first transmission member is capable of rotating along with the pressing roller; the damping assembly is disposed beside the first transmission member, and the damping assembly is capable of applying resistance to the first transmission member.

In the technical solution of this embodiment, the first transmission member capable of rotating along with the pressing roller is provided, and the damping assembly capable of applying resistance to the first transmission member is provided to reduce the rotating speed of the pressing roller, so that the pressing roller is capable of applying a corrective force to the electrode plate in a direction opposite to a movement direction of the electrode plate, and the electrode plate is stretched through a component force of the corrective force in a direction perpendicular to the electrode plate, thereby alleviating the problem of electrode plate wrinkling. At the same time, the component force of the corrective force can also drive the electrode plate to move, thereby alleviating the problem of electrode plate skewing and improving the yield of the electrode plate.

In some embodiments, the damping assembly includes at least two different states to apply resistances of different magnitudes to the first transmission member.

In the technical solution of this embodiment, the damping assembly is allowed to include at least two different states, and resistances of different magnitudes are applied to the first transmission member through the different states, so that the first transmission member can provide resistances of different magnitudes to the pressing roller, and the pressing roller can play different deceleration effects on the electrode plate, thereby enabling the damping device to adapt to different skewing and different wrinkling conditions of the electrode plate, and thus improving the correction capability of the damping device.

In some embodiments, the material of the first transmission member includes a magnetically conductive material, and the damping assembly is capable of forming a magnetic field around the first transmission member; and
the rotation of the first transmission member in the magnetic field is capable of forming a closed current inside the first transmission member.

In the technical solution of this embodiment, the first transmission member is made of a magnetically conductive material, and the damping assembly provides resistance to the first transmission member through the magnetic field. Compared with structures such as brake pads that directly contact a workpiece to provide resistance, employing a magnetic field to provide resistance can provide buffering for the deceleration of the first transmission member, reduce situations such as a sudden increase in structural load and a sudden change in a force applied on the electrode plate that may be caused by a sudden decrease in speed due to direct contact, thereby improving the service life and stability of the structure in the damping device, while also reducing the possible negative impact on the electrode plate.

In some embodiments, the first transmission member includes an annular member, so that the rotation of the first transmission member in the magnetic field is capable of forming an annular closed current inside the first transmission member.

In the technical solution of this embodiment, the first transmission member is an annular member, so that when the first transmission member moves in the magnetic field, it is easier for a stable closed current to be formed inside it along the shape of the annular member, thereby enabling the magnetic field to provide resistance to the first transmission member more stably.

In some embodiments, the damping assembly includes a first magnet and a second magnet disposed on two opposite sides of the first transmission member, and the first magnet is movable relative to the second magnet.

The technical solution of this embodiment provides some specific structures for the damping assembly, so that the damping assembly can provide a magnetic field around the first transmission member, and the first transmission member can form an induced current during the movement, thereby enabling the damping assembly to provide resistance to the first transmission member more stably; and so that the first magnet can move relative to the second magnet to enable the damping assembly to provide magnetic fields with different magnetic field strengths, thereby providing different resistances to the first transmission member, and enabling the pressing roller to have different speeds to adapt to different skewing conditions and different wrinkling conditions of the electrode plate.

In some embodiments, the first magnet is rotatable relative to the second magnet, and the first magnet has different magnetic poles in a circumferential direction of a rotation axis thereof, so as to change the projection areas of the different magnetic poles of the first magnet on the opposite magnetic poles of the second magnet.

In the technical solution of this embodiment, the first magnet is rotatable relative to the second magnet to change the projection areas of the magnetic poles of the first magnet on the opposite magnetic poles of the second magnet, thereby changing the strength of the magnetic field formed between the first magnet and the second magnet, and thus changing the resistance provided by the magnetic field to the first transmission member, so as to achieve the effect of providing different resistances to the first transmission member through the damping assembly.

In some embodiments, the first magnet includes a first part and a second part with different magnetic properties, the second magnet includes a third part and a fourth part with different magnetic properties, and the third part and the first part have different magnetic properties;
along the circumferential direction of the rotation axis of the first magnet, the first part and the second part are sequentially arranged, and the third part and the fourth part are sequentially arranged.

The technical solution of this embodiment provides some specific structures for the first magnet and the second magnet, so that the first magnet includes a first part and a second part disposed sequentially along a circumferential direction thereof, and the second magnet includes a third part and a fourth part disposed sequentially along the circumferential direction of the first magnet, so that the rotation of the first magnet relative to the second magnet can change the projection area of the first part on the third part, thereby changing the strength of the magnetic field formed between the first magnet and the second magnet, and thereby changing the resistance provided by the magnetic field to the first transmission member, achieving the effect of providing different resistances to the first transmission member through the damping assembly.

In some embodiments, the damping device further includes a second transmission member that is drivingly connected to the first transmission member, and the second transmission member is drivingly connected to the pressing roller.

In the technical solution of this embodiment, the first transmission member is drivingly connected to the pressing roller via the second transmission member, which facilitates the layout of the structure and alleviates problems such as the narrow mounting space caused by the first transmission member being directly connected to the pressing roller.

In some embodiments, the second transmission member abuts against the pressing roller and can rotate along with the pressing roller by friction.

In the technical solution of this embodiment, the second transmission member abuts against the pressing roller, so that the pressing roller drives the second transmission member to rotate through friction. Compared with gear transmission and the like manners, friction transmission can provide buffering for the damping device and the pressing roller, so as to reduce the negative impact that may be caused by the sudden increase in load due to the sudden change in resistance applied on the first transmission member.

In some embodiments, the second transmission member includes a base and a damping member disposed around the base, the base being connected to the first transmission member, and the damping member abutting against the pressing roller and being capable of rotating with the pressing roller by friction.

The technical solution of this embodiment provides some specific structures for the second transmission member, so that the second transmission member is connected to the first transmission member through the base and connected to the pressing roller through the damping member; since the damping member is connected to the pressing roller through friction, this arrangement easily leads to a short life of the damping member. The second transmission member includes the base and the damping member, so that the damping member can be replaced separately, thereby improving the overall life of the damping device.

In some embodiments, the damping member is made of at least one of a rubber-based material, a carbon fiber material, a resin-based material, or a semi-metallic material.

The technical solution of this embodiment provides some specific materials for the damping member, so that there can be a large frictional force between the damping member and the pressing roller, thereby enabling the damping member to rotate synchronously with the pressing roller better, and the sliding friction between the damping member and the pressing roller can be reduced.

In some embodiments, in an axial direction of the pressing roller, a dimension range of a contact face between the second transmission member and the pressing roller is 3 mm-20 mm.

The technical solution of this embodiment provides a width range for the second transmission member, so that the second transmission member can better provide resistance to the pressing roller, while also reducing the space requirement of the second transmission member, thereby reducing the overall volume and weight of the damping device.

In some embodiments, the damping device further includes a case, the second transmission member is disposed outside the case, and the first transmission member and the damping structure are accommodated within the case.

In the technical solution of this embodiment, the damping device further includes a case, which accommodates the first transmission member and the damping structure to play a role on the first transmission member and the damping structure; at the same time, the second transmission member is located outside the case, so that the second transmission member is drivingly connected to the pressing roller.

In some embodiments, the electrode plate flattening device includes at least one of the pressing rollers, and at least one of the damping devices is capable of being disposed on the periphery of any one of the pressing rollers.

In the technical solution of this embodiment, the damping device can be disposed beside any pressing roller as desired, or the damping devices can be disposed beside several pressing rollers respectively; and at the same time, only one damping device or multiple damping devices can be disposed beside each pressing roller to adapt to different needs under different working conditions.

In some embodiments, the damping device further includes a bracket detachably disposed beside any of the pressing rollers.

In the technical solution of this embodiment, the damping device can be detachably disposed beside any pressing roller via a bracket, so that a worker can change the position of the damping device according to the actual working conditions, thereby improving the flexibility in use of the damping device and also reducing the cost.

In a second aspect, some embodiments of the present application further provides an electrical plate coating device, comprising:
a pressing roller capable of being pressed on an electrode plate and capable of rotating along with the displacement of the electrode plate; and
a damping device including a first transmission member and a damping assembly;
where the first transmission member is capable of rotating along with the pressing roller; the damping assembly is disposed beside the first transmission member, and the damping assembly is capable of applying resistance to the first transmission member.

In the technical solution of this embodiment, the first transmission member capable of rotating along with the pressing roller is provided, and the damping assembly capable of applying resistance to the first transmission member is provided to reduce the rotating speed of the pressing roller, so that the pressing roller is capable of applying a corrective force to the electrode plate in a direction opposite to a movement direction of the electrode plate, and the electrode plate is stretched through a component force of the corrective force in a direction perpendicular to the electrode plate, thereby alleviating the problem of electrode plate wrinkling. At the same time, the component force of the corrective force can also drive the electrode plate to move, thereby alleviating the problem of electrode plate skewing and improving the yield of the electrode plate.

The above description is only a summary of the technical solutions of the present application, and in order to understand more clearly the technical means of the present application for implementing in accordance with the contents of the specification, and in order to make the above and other objectives, features and advantages of the present application more apparent and readily understandable, detailed description of the present application are hereby set forth below.

### BRIEF DESCRIPTION OF THE DRAWINGS

To describe the technical solutions in the embodiments of the present application more clearly, the following briefly describes the accompanying drawings required for describing the embodiments or the prior art. Apparently, the accompanying drawings in the following description show some embodiments of the present application, and a person of ordinary skill in the art may still derive other drawings from these accompanying drawings without creative efforts.
FIG. 1 is a schematic top view of an electrode plate flattening device provided by some embodiments of the present application.
FIG. 2 is a partial enlarged schematic diagram of A in FIG. 1.
FIG. 3 is a schematic cross-sectional view of a damping device provided by some embodiments of the present application.
FIG. 4 is a schematic perspective view of a bracket in the damping device provided by some embodiments of the present application.

The meaning of the reference numbers in the drawings are:
100. damping device;
10. first transmission member;
20. damping assembly; 21. first magnet; 211. first part; 212. second part; 22. second magnet; 221. third part; 222. fourth part; 23. case; 24. bracket;
30. second transmission member; 31. base; 32. damping member;
200. electrode plate flattening device;
40. pressing roller;
50. electrode plate; 51. blank region; 52. coated region.

### DETAILED DESCRIPTION

The embodiments of the technical solution of the present application will be described in detail hereafter with reference to the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features as indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

Currently, from the development of market situation, the application of power batteries is becoming increasingly more extensive. Power batteries not only have been applied to energy storage power source systems such as hydraulic, firepower, wind and solar power stations, but also have been widely applied to many fields, e.g., electric transportation vehicles such as electric bicycles, electric motorcycles, and electric automobiles, as well as military equipment and aerospace. With the continuous expansion of the application field of the power batteries, the market demand of the secondary batteries is also constantly expanding.

In the structure of a battery, an electrode assembly is an important component, and the electrode assembly is generally formed by winding of an electrode plate and a separator. The electrode plate needs to be coated with an active material to form a coated region, and a blank region without the active material needs to be left. During the electrode plate coating process, a flattening device is usually needs to be disposed. The pressing roller of the flattening device flattens the active material coated on the electrode plate and the blank region. The pressing roller is usually a passive roller that moves synchronously with the travel of the electrode plate. The pressing roller is used for enabling the active material to be distributed evenly and flatly, and is also used for reducing wrinkles in the blank region.

In current electrode plate coating and electrode plate flattening devices, as the electrode plate travels and the operating time increases, the pressing roller is prone to gradually displacing and skewing under the action of the electrode plate, and the electrode plate is also prone to skewing and the like conditions. These conditions can easily lead to uneven pressure applied to the electrode plate by the pressing roller, resulting in uneven distribution of the active material on the electrode plate and unevenness of the electrode plate. It can also easily cause a negative effect on the flattening of wrinkles in the blank region.

To alleviate the problems of pressing roller displacement and electrode plate skewing, the pressing roller can be set as a floating roller. For example, a centripetal joint bearing, a floating part and the like structures are introduced onto the pressing roller. The outer surface of the centripetal joint bearing is spherical, and the floating part can swing within a certain range around the centripetal joint bearing as a center. This allows the uneven electrode plate to abut against the pressing roller, thereby reducing the occurrence of electrode plate skewing and also reducing the occurrence of overall pressing roller skewing. However, this structure has poor ability to flatten the electrode plate, making it difficult to distribute the active material on the electrode plate evenly and flat, and also making it difficult to flatten the wrinkles in the blank region.

To alleviate the problems of pressing roller displacement and skewing, and electrode plate skewing, hydraulic cylinders, air cylinders, connecting shafts, and the like structures can also be disposed on the pressing roller to facilitate adjustment of the position of the pressing roller and reduce the displacement and skewing of the pressing roller. However, this structure has a high requirement on space and is not easy to mount, disassemble, or replace, resulting in high using costs. Furthermore, when flattening wrinkles, the pressure of such a structure on the electrode plate is not easy to control. If the applied pressure is too high, it is easy to reduce the tolerance of the current collector of the electrode plate, and damage the blank region of the electrode plate by pinching, which is not conducive to the elimination of wrinkles, and it is easy to cause the strip to break during other operations of the electrode plate subsequently. If the applied pressure is too low, the flattening effect on the wrinkles in the blank region is poor.

Based on the above considerations, in order to alleviate the problems of pressing roller displacement, skewing and electrode plate skewing, some embodiments of the present application provide a damping device beside the pressing roller, so that the first transmission member can rotate along with the pressing roller and the damping assembly can apply resistance to the first transmission frame, so as to apply resistance to the pressing roller through the first transmission member.

Under the action of the damping device, sliding friction can be formed between the pressing roller and the electrode plate, so that the pressing roller can apply a corrective force to the electrode plate opposite to the direction of electrode plate movement; a component force of the corrective force in the direction perpendicular to the electrode plate can stretch the electrode plate to alleviate the problem of electrode plate wrinkling, while another component force of the corrective force can drive the electrode plate to move to alleviate the problem of electrode plate skewing. When the electrode plate becomes skewed, or the pressing roller is displaced or skewed, the damping device can be activated to correct the position of the electrode plate and flatten it, thereby improving the yield of the electrode plate and improving production efficiency.

The damping device disclosed in the present application can be used in various devices with electrode plate flattening functions, for example in electrode plate coating devices, electrode plate flattening devices or the like devices.

For the convenience of description in the following embodiments, the application of a damping device 100 according to an embodiment of the present application to an electrode plate flattening device 200 is taken as an example for description.

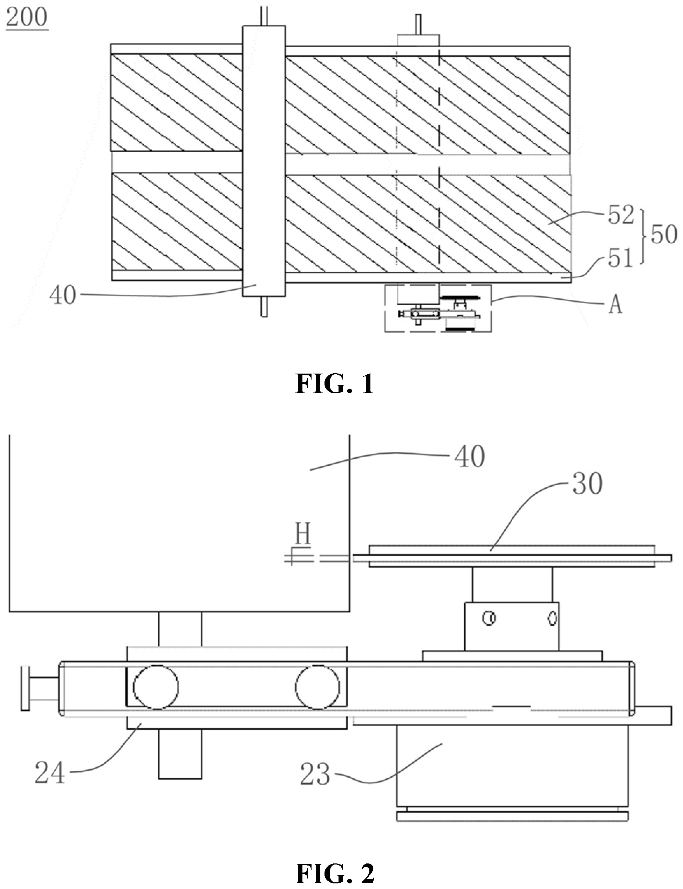

Reference is made to FIG. 1, where FIG. 1 is a schematic top view of an electrode plate flattening device 200 provided by some embodiments of the present application; The electrode plate flattening device 200 is used for flattening the active material on the current collector of the electrode plate 50. The current collector can be a sheet structure of copper foil, aluminum foil or other materials; the active material can be lithium manganate, lithium cobalt oxide, lithium nickel cobalt manganese oxide, graphite or other materials; the electrode plate flattening device 200 is also used for flattening the electrode plate 50 to reduce wrinkles on the electrode plate 50; and depending on the type of the active material, the electrode plate 50 can be a positive electrode plate or a negative electrode plate. The electrode plate flattening device 200 may include a pressing roller 40. The pressing roller 40 is used for flattening the active material coated on the electrode plate 50 and flatten the blank region 51. The pressing roller 40 is a passive roller and a roller that moves synchronously with the travel of the electrode plate 50. The pressing roller 40 is used for enabling the active material to be distributed evenly and flatly, and is also used for reducing wrinkles in the blank region 51.

In a first aspect, some embodiments of the present application provide an electrode plate flattening device 200. Reference is made to FIG. 1 and FIG. 2, where FIG. 1 is a schematic top view of an electrode plate flattening device 200 provided by some embodiments of the present application, and FIG. 2 is a partial enlarged schematic diagram of A in FIG. 1.

The electrode plate flattening device 200 provided by some embodiments of the present application includes a damping device 100 and a pressing roller 40. The pressing roller 40 can press on the electrode plate 50, and the pressing roller 40 can rotate along with the displacement of the electrode plate 50. The damping device 100 is applied to the pressing roller 40, and the damping device 100 includes a first transmission member 10 and a damping assembly 20; where, the first transmission member 10 can rotate along with the pressing roller 40; the damping assembly 20 is disposed beside the first transmission member 10, and the damping assembly 20 can apply resistance to the first transmission member 10.

The pressing roller 40 refers to a structure in the electrode plate flattening device 200 used for pressing the electrode plate 50. Not only the pressing roller 40 is used for flattening the active material in the coated region 52 of the electrode plate 50 to improve the uniformity of the active material and the flatness of the electrode plate 50, but also the pressing roller 40 is used for flattening the wrinkles in the blank region 51 of the electrode plate 50 to improve the flatness of the electrode plate 50. The material of the pressing roller 40 can be plastic, metal or other materials.

The pressing roller 40 can rotate along with the displacement of the electrode plate 50, that is, the pressing roller 40 is a passive roller. The travel of the electrode plate 50 can drive the pressing roller 40 to rotate along with at. At this time, there is rolling friction between the pressing roller 40 and the electrode plate 50.

The first transmission member 10 refers to the structure in the damping device 100 that is drivingly connected to the pressing roller 40. The material of the first transmission member 10 can be plastic, metal or other materials.

The first transmission member 10 can be directly connected to the pressing roller 40; for example, the first transmission member 10 can directly abut against the pressing roller 40, so that the rotation of the pressing roller 40 can drive the first transmission member 10 to rotate along with it through friction, and in this case the first transmission member 10 can be a friction wheel or other wheel-shaped structures; and also for example, the first transmission member 10 can also be a gear, and in this case a corresponding gear can be disposed on the pressing roller 40 to enable the pressing roller 40 to drive the first transmission member 10 to rotate.

The first transmission member 10 can also be indirectly connected to the pressing roller 40; for example, an idler wheel can be disposed between the first transmission member 10 and the pressing roller 40, and in this case according to the structure of the first transmission member 10, the idler wheel can be a friction wheel, a gear or other structures; and also for example, the first transmission member 10 can also be a pulley, a sprocket or other structures, and in this case the pressing roller 40 can drive the first transmission member 10 to rotate through a synchronous belt, a chain or other structures.

The damping device 100 refers to a structure in the damping device 100 that can provide resistance to the first transmission member 10. The damping device 100 can provide resistance by directly contacting the first transmission member 10. For example, the damping device 100 may include a telescopic cylinder and a brake pad. The telescopic cylinder can cause the brake pad to abut against the first transmission member 10 to provide resistance. The resistance device can also provide resistance to the first transmission member 10 indirectly. For example, the damping device 100 may include an electromagnetic generating structure that can generate an electromagnetic force to provide resistance to the first transmission member 10.

The damping assembly 20 can provide resistance to the first transmission member 10 to reduce the rotational speed of the first transmission member 10, and the reduction in the rotational speed of the first transmission member 10 can drive the rotational speed of the pressing roller 40 to decrease synchronously. As the pressing roller 40 rotates along with the travel of the electrode plate 50, rolling friction is formed between the pressing roller 40 and the electrode plate 50 at this time. When the rotation speed of the pressing roller 40 decreases, the pressing roller 40 slides relative to the electrode plate 50. At this time, sliding friction is also formed between the pressing roller 40 and the electrode plate 50. This sliding friction can apply a force to the electrode plate 50 opposite to the travel direction of the electrode plate 50, and this force is called a corrective force.

When the pressing roller 40 is displaced or skewed, or when the electrode plate 50 is skewed or wrinkled, the force exerted by the pressing roller 40 on the electrode plate 50 will form an included angle with the traveling direction of the electrode plate 50. At this time, the damping device 100 can be activated to provide resistance to the rotation of the pressing roller 40, so that the pressing roller 40 can apply a corrective force to the electrode plate 50. A component force of the corrective force perpendicular to the direction of the electrode plate 50 can stretch the electrode plate 50 to relieve the wrinkles of the electrode plate 50 and play a role in flattening the wrinkles of the electrode plate 50. Another component force of the corrective force can drive the electrode plate 50 to move to relieve the displacement problem of the electrode plate 50 and correct the position of the electrode plate 50.

At the same time, the reduced rotation speed of the pressing roller 40 can also reduce the traveling speed of the electrode plate 50, so as to correct the position of the electrode plate 50 and alleviate the skewness of the electrode plate 50.

Since during the coating process, the electrode plate 50 is negatively affected by the difference in level among the pressing rollers 40 and the difference in correction of the electrode plate 50, and the like, the electrode plate 50 is prone to skewing towards one side and forming wrinkles. Accordingly, in this embodiment, a first transmission member 10 that can rotate along with the pressing roller 40 is provided, and a damping assembly 20 that can provide resistance to the first transmission member 10 to reduce the rotational speed of the pressing roller 40 is provided, so that the pressing roller 40 can apply a corrective force to the electrode plate 50 in a direction opposite to the movement direction of the electrode plate 50., and a component force of this corrective force in a direction perpendicular to the electrode plate 50 stretches the electrode plate 50 to alleviate the problem of wrinkling of the electrode plate 50. At the same time, the component force of this corrective force can also drive the electrode plate 50 to move, thus alleviating the problem of skewness of the electrode plate 50 and improving the yield of the electrode plate 50. At the same time, the providing of the first transmission member 10 can also reduce the occurrence of problems such as shortened life of the pressing roller 40, mounting difficulties and the like that may result from the damping assembly 20 directly contacting the pressing roller 40.

In some embodiments, the damping assembly 20 includes at least two different states to apply resistances of different magnitudes to the first transmission member 10.

The different states of the damping assembly 20 can refer to the relative position of the damping assembly 20 and the first transmission member 10, or to the different states of the damping assembly 20 itself. The damping assembly 20 can have two different states, or three or more different states. When the damping assembly 20 is in different states, the damping assembly 20 can provide different resistances to the first transmission member 10.

According to the different structures of the damping assembly 20, the damping assembly 20 can change the magnitude of the resistance in different ways. In some embodiments, the damping assembly 20 includes a telescopic cylinder and a brake pad. The telescopic cylinder enables the brake pad to abut against the first transmission member 10 to provide a resistance. In this case, the different states of the damping assembly 20 refer to different extension lengths of the telescopic cylinder. The damping assembly 20 can enable the telescopic cylinder to have different lengths in different states, so as to adjust the magnitude of the pressure of the brake pad abutting against the first transmission member 10 by controlling the extension length, thereby adjusting the magnitude of the friction between the brake pad and the first transmission member 10 and achieving the effect of adjusting the magnitude of the resistance. In some other embodiments, the damping device 100 includes an electromagnetic generating structure that can generate an electromagnetic force to provide resistance to the first transmission member 10. In this case, the different states of the damping assembly 20 refer to different magnitudes of current in the electromagnetic generating structure. The damping assembly 20 has different currents in different states to change the magnitude of the electromagnetic force applied to the first transmission member 10, thereby achieving the effect of adjusting the magnitude of the resistance. In some further embodiments, the damping device 100 includes an electromagnetic generating structure that can generate an electromagnetic force to provide resistance to the first transmission member 10. In this case, the different states of the damping assembly 20 refer to the distance between the electromagnetic generating structure and the first transmission member 10. The distance between the damping assembly 20 and the first transmission member 10 is different in different states to change the magnitude of the electromagnetic force applied to the first transmission member 10. It can be understood that, according to the different structures of the damping assembly 20, the way the damping assembly 20 adjusts the magnitude of the resistance can also be in other ways, and is not limited to the aforementioned ways.

The damping assembly 20 can apply resistances of different magnitudes to the first transmission member 10, thereby enabling the first transmission member 10 to have different accelerations and rotational speeds, which in turn enables the pressing roller 40 to have different accelerations and rotational speeds. As the traveling of the electrode plate 50 drives the pressing roller 40 to rotate, the different reduction in the rotational speed of the pressing roller 40 has a different effect on the traveling speed of the electrode plate 50. This allows the pressing roller 40 to provide different deceleration effects for different degrees of skewness of the electrode plate 50 and different degrees of wrinkling of the electrode plate 50, so as to better achieve the effect of correction and flattening.

In this embodiment, the damping assembly 20 is enabled to apply resistances of different magnitudes to the first transmission member 10, so that the first transmission member 10 can provide resistances of different magnitudes to the pressing roller 40, and the pressing roller 40 can play different deceleration effects on the electrode plate 50, thereby enabling the damping device 100 to adapt to different skewing and different wrinkling conditions of the electrode plate 50, and thus improving the correction capability of the damping device 100.

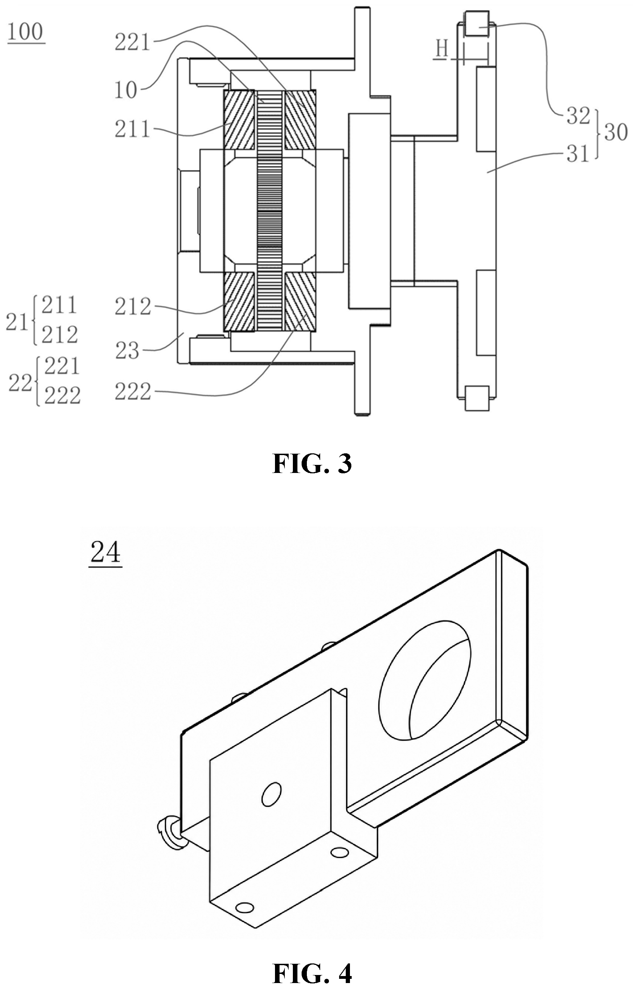

According to some embodiments of the present application, reference is made to FIGs. 2 and 3, where FIG. 2 is a schematic top view of the pressing roller 40 provided by some embodiments of the present application and a damping device 100 disposed beside the pressing roller, and FIG. 3 is a schematic cross-sectional view of the damping device 100 provided by some embodiments of the present application.

In some embodiments of the present application, the material of the first transmission member 10 includes a magnetically conductive material, and the damping assembly 20 can form a non-uniform magnetic field around the first transmission member 10; and the rotation of the first transmission member 10 within the magnetic field can form a closed current inside the first transmission member 10.

The material of the first transmission member 10 can be iron, steel or other pure metals. The material of the first transmission member 10 can also be an iron-silicon alloy, an iron-aluminum alloy or other alloys. The material of the first transmission member 10 can also be other materials that are easily magnetized under the action of a magnetic field.

The damping assembly 20 can form a magnetic field and provide resistance to the rotation of the first transmission member 10 through a magnetic force. In some embodiments, the damping assembly 20 may include a permanent magnet, the material of which may include ferrite, an aluminum-nickel-cobalt alloy or other permanent magnet materials. In this case, the resistance applied by the damping assembly 20 to the first transmission member 10 can be changed by changing the distance between the permanent magnet and the first transmission member 10. In some other embodiments, the damping assembly 20 may also include an electromagnet. In this case, the resistance applied by the damping assembly 20 to the first transmission member 10 can be changed by changing the magnitude of the current in the electromagnet.

The non-uniform magnetic field refers to magnetic field strengths being different at different locations around the first transmission member 10. For example, the damping assembly 20 can form two or more magnetic fields with different magnetic field strengths around the first transmission member 10; or also for example, the damping assembly 20 can also form a magnetic field only in partial space around the first transmission member 10, then the magnetic field strength in other spaces around the first transmission member 10 will be lower or zero. This setting can also form a non-uniform magnetic field around the first transmission member 10. It can be understood that the non-uniform magnetic field can also be formed in other ways, and is not limited to the two mentioned above.

The rotation of the first transmission member 10 within the magnetic field can generate a closed current inside the first transmission member 10, which is generated by electromagnetic induction; and accordingly, the first transmission member 10 can be a closed ring structure, a disk-shaped structure, or other structures capable of generating a closed current.

Because the damping assembly 20 can form a magnetic field around the first transmission member 10, and the first transmission member 10 can rotate along with the rotation of the pressing roller 40, the first transmission member 10 can rotate in the magnetic field and generate an induced current inside the first transmission member 10; and also because the current in the first transmission member 10 is formed by induction, and the magnetic field formed by the induced current always opposes the change in the magnetic flux that causes the induced current, as the first transmission member 10 rotates in the non-uniform magnetic field, the first transmission member 10 will always be subject to the resistance of the magnetic field to oppose the change in its internal current, and thus provide resistance for the rotation of the first transmission member 10.

If resistance is provided by allowing structures such as brake pads to directly contact the first transmission member 10, the speed of the first transmission member 10 will change in a short time when the resistance changes. The force generated in this process will be borne by the first transmission member 10, the pressing roller 40, and other related structures, leading to a sudden increase in structural load. This can easily cause structural deformation, cracks, or even breakage, and easily reduce the structural lifespan. Compared to structures that allow structures such as brake pads to directly contact the first transmission member 10, using a magnetic field to provide resistance can make the speed change of the first transmission member 10 smoother. This can reduce the impact that the change in resistance may cause on the first transmission member 10, the pressing roller 40, or other structures, thereby protecting the structure and improving the lifespan of the structure.

In this embodiment, the first transmission member 10 is made of a magnetically conductive material, and the damping assembly 20 provides resistance to the first transmission member 10 through the magnetic field. Compared with structures such as brake pads that directly contact a workpiece to provide resistance, employing a magnetic field to provide resistance can provide buffering for the deceleration of the first transmission member 10, reduce situations such as a sudden increase in structural load and a sudden change in a force applied on the electrode plate 50 that may be caused by a sudden decrease in speed due to direct contact, thereby improving the service life and stability of the structure in the damping device 100, while also reducing the possible negative impact on the electrode plate 50.

Referring to FIG. 3, in some embodiments, the first transmission member 10 includes an annular member, so that the rotation of the first transmission member 10 in the magnetic field is capable of forming an annular closed current inside the first transmission member 10.

The first transmission member 10 is an annular member, so that when the movement of the first transmission member 10 in the magnetic field can more easily form a stable closed current along the shape of the annular member, thereby enabling the first transmission member 10 to be continuously and relatively stably subjected to the resistance applied by the magnetic field in the magnetic field.

In this embodiment, the first transmission member 10 is an annular member, so that when the first transmission member 10 moves in the magnetic field, it is easier for a stable closed current to be formed inside it, thereby enabling the magnetic field to provide resistance to the first transmission member 10 more stably.

Referring to FIG. 3, in some embodiments, the damping assembly 20 includes a first magnet 21 and a second magnet 22 disposed on two opposite sides of the first transmission member 10, and the first magnet 21 is movable relative to the second magnet 22.

The first magnet 21 refers to a structure in the damping assembly 20 that can generate a magnetic field. The first magnet 21 may include a permanent magnet, a material of which may include ferrite, an aluminum-nickel-cobalt alloy or other permanent magnet materials. The first magnet 21 may also include an electromagnet, and the shape of the first magnet 21 may be ring-shaped, strip-shaped, block-shaped or other shapes.

Similar to the first magnet 21, the second magnet 22 refers to a structure in the damping assembly 20 that can generate a magnetic field. The second magnet 22 may include a permanent magnet, a material of which may include ferrite, an aluminum-nickel-cobalt alloy or other permanent magnet materials. The second magnet 22 may also include an electromagnet, and the shape of the second magnet 22 may be ring-shaped, strip-shaped, block-shaped or other shapes.

The first magnet 21 and the second magnet 22 are respectively disposed on two opposite sides of the first transmission member 10 to form a magnetic field between the first magnet 21 and the second magnet 22, so that the first transmission member 10 can move in the magnetic field.

The first magnet 21 and the second magnet 22 can have a variety of different relative positions. In some embodiments, the first magnet 21 may be disposed opposite to the second magnet 22, and the projections of both the first magnet 21 and the second magnet 22 on the first transmission member 10 will not completely cover the first transmission member 10. That is, the magnetic field formed between the first magnet 21 and the second magnet 22 cannot completely cover the first transmission member 10. In this case, partial of the first transmission member 10 will be resisted by the magnetic field when it enters or leaves the magnetic field. In some other embodiments, the first magnet 21 may be disposed opposite to the second magnet 22, and the projections of both the first magnet 21 and the second magnet 22 on the first transmission member 10 will completely cover the first transmission member 10, so as to partially alternate the south pole (S pole) of the first magnet 21 with the south pole (S pole) of the second magnet 22, or to partially alternate the north pole (N pole) of the first magnet 21 with the north pole (N pole) of the second magnet 22. In this case, the first magnet 21 and the second magnet 22 can also form different magnetic fields around the first transmission member 10. In some further embodiments, the first magnet 21 and the second magnet 22 can be alternately arranged. In this case, partial of the first transmission member 10 will be resisted by the corresponding magnetic field when it enters or leaves the magnetic field formed by the first magnet 21 or the magnetic field formed by the second magnet 22.

The first magnet 21 can move relative to the second magnet 22, where the first magnet 21 can have multiple directions of movement relative to the second magnet 22. In some embodiments, the first magnet 21 can move in a direction that is approaching or away from the second magnet 22. As the distance between the first magnet 21 and the second magnet 22 changes, the magnetic field strength of the magnetic field near the first transmission member 10 also changes, and the resistance applied to the first transmission member 10 by the magnetic field is also different. In some other embodiments, the first magnet 21 can also move relative to the second magnet 22 in other directions to change the projection area of the first magnet 21 on the second magnet 22, that is, to change the area of the overlapping part between the first magnet 21 and the second magnet 22. This setting can also change the strength of the magnetic field, thereby changing the resistance applied to the first transmission member 10 by the magnetic field.

This embodiment provides some specific structures for the damping assembly 20, so that the damping assembly 20 can provide a magnetic field around the first transmission member 10, and the first transmission member 10 can form an induced current during the movement, thereby enabling the damping assembly 20 to provide resistance to the first transmission member 10 more stably; and so that the first magnet 21 can move relative to the second magnet 22 to enable the damping assembly 20 to provide magnetic fields with different magnetic field strengths, thereby providing different resistances to the first transmission member 10, and enabling the pressing roller 40 to have different speeds to adapt to different skewing conditions and different wrinkling conditions of the electrode plate 50.

Referring to FIG. 3, in some embodiments, the first magnet 21 is rotatable relative to the second magnet 22, and the first magnet 21 has different magnetic poles in a circumferential direction of a rotation axis thereof, so as to change the projection areas of the different magnetic poles of the first magnet 21 on the opposite magnetic poles of the second magnet 22.

The first magnet 21 can rotate relative to the second magnet 22. Specifically, the first magnet 21 can be fixed and the second magnet 22 can be allowed to rotate, or the second magnet 22 can be fixed and the first magnet 21 can be allowed to rotate, or both the first magnet 21 and the second magnet 22 can be allowed to rotate.

The first magnet 21 has different magnetic poles in a circumferential direction of a rotating axis of the first magnet 21. During rotation of the first magnet 21, the projection areas of the different magnetic poles of the first magnet 21 onto the opposite magnetic poles of the second magnet 22 change. That is, the relative positions of the different magnetic poles of the first magnet 21 and the different magnetic poles of the second magnet 22 change, thereby altering the magnetic field strengths at various points in the magnetic field formed between the first magnet 21 and the second magnet 22. For example, the rotation of the first magnet 21 can change the relative positions of the N pole of the first magnet 21 and the S pole of the second magnet 22 and reduce the overlapping area of the N pole of the first magnet 21 and the S pole of the second magnet 22. At this time, the magnetic field strength of the magnetic field generated at the corresponding position will decrease, and the resistance to the first transmission member 10 will also decrease. Also for example, the rotation of the first magnet 21 can change the relative positions of the S pole of the first magnet 21 and the N pole of the second magnet 22, and increase the overlapping area of the S pole of the first magnet 21 and the N pole of the second magnet 22. At this time, the magnetic field strength of the magnetic field generated at the corresponding position will increase, and the resistance to the first transmission member 10 will also increase.

In this embodiment, the first magnet 21 is rotatable relative to the second magnet 22 to change the projection areas of the magnetic poles of the first magnet 21 on the opposite magnetic poles of the second magnet 22, thereby changing the strength of the magnetic field formed between the first magnet 21 and the second magnet 22, and thus changing the resistance provided by the magnetic field to the first transmission member 10, so as to achieve the effect of providing different resistances to the first transmission member 10 through the damping assembly 20.

Referring to FIG. 3, in some embodiments, the first magnet 21 includes a first part 211 and a second part 212 with different magnetic properties, and the second magnet 22 includes a third part 221 and a fourth part 222 with different magnetic properties, and the third part 221 and the first part 211 have different magnetic properties; along the circumferential direction of the rotation axis of the first magnet 21, the first part 211 and the second part 212 are sequentially arranged, and the third part 221 and the fourth part 222 are sequentially arranged.

The first magnet 21 includes a first part 211 and a second part 212 with different magnetic properties. Both the first part 211 and the second part 212 are partial structures of the first magnet 21 facing the second magnet 22. The first part 211 can be an N pole, and the second part 212 can be an S pole. Alternatively, the first part 211 can be an S pole, and the second part 212 can be an N pole. The shapes of the first part 211 and the second part 212 can be arc-shaped, square-shaped, or other shapes.

Since the first magnet 21 can rotate relative to the second magnet 22, the first magnet 21 has a rotation axis so that the first magnet 21 can rotate around the rotation axis. The first part 211 and the second part 212 are sequentially arranged around the rotation axis. Specifically, the first part 211 and the second part 212 can be arranged with intervals or can abut against each other. When the first part 211 and the second part 212 are arranged with intervals, the first part 211 and the second part 212 can be connected by a structural member.

Similar to the first magnet 21, the second magnet 22 includes a third part 221 and a fourth part 222 with different magnetic properties. Both the third part 221 and the fourth part 222 are partial structures of the second magnet 22 facing the first magnet 21. The third part 221 can be an N pole, then the first part 211 and the fourth part are both S poles; or the third part 221 can be an S pole, then the first part 211 and the fourth part 222 are N poles. The shapes of the third part 221 and the fourth part 222 can be arc-shaped, square-shaped, or other shapes. The third part 221 and the fourth part 222 can be arranged with intervals circumferentially around the rotation axis of the first magnet 21, or they can abut against each other. When the third part 221 and the fourth part 222 are arranged with intervals, the third part 221 and the fourth part 222 can be connected by a structural member.

When the first part 211 is opposite to the third part 221, a magnetic induction lines can be generated between the first part 211 and the third part 221 to pass through the magnetic field of the first transmission member 10. The larger the projection area of the first part 211 on the third part 221, the stronger the magnetic field strength of the magnetic field, and the greater the resistance encountered by the first transmission member 10 when passing through the magnetic field. The smaller the projection area of the first part 211 on the third part 221, the weaker the magnetic field strength of the magnetic field, and the smaller the resistance encountered by the first transmission member 10 when passing through the magnetic field.

Similar to the first part 211 and the third part 221, when the second part 212 is opposite to the fourth part 222, a magnetic induction lines can be generated between the second part 212 and the fourth part 222 to pass through the magnetic field of the first transmission member 10. The larger the projection area of the second part 212 on the fourth part 222, the stronger the magnetic field strength of the magnetic field, and the greater the resistance encountered by the first transmission member 10 when passing through the magnetic field. The smaller the projection area of the second part 212 on the fourth part 222, the weaker the magnetic field strength of the magnetic field, and the smaller the resistance encountered by the first transmission member 10 when passing through the magnetic field.

When the first magnet 21 rotates relative to the second magnet 22, the projection area of the first part 211 on the third part 221 will change, and the projection area of the second part 212 on the fourth part 222 will also change, thereby adjusting the magnetic field strength of the corresponding magnetic field, and thus achieving the effect of adjusting the resistance subjected by the first transmission member 10.

This embodiment provides some specific structures for the first magnet 21 and the second magnet 22, so that the first magnet 21 includes a first part 211 and a second part 212 disposed sequentially along a circumferential direction thereof, and the second magnet 22 includes a third part 221 and a fourth part 222 disposed sequentially along the circumferential direction of the first magnet 21, so that the rotation of the first magnet 21 relative to the second magnet 22 can change the projection area of the first part 211 on the third part 221, thereby changing the strength of the magnetic field formed between the first magnet 21 and the second magnet 22, and thereby changing the resistance provided by the magnetic field to the first transmission member 10, achieving the effect of providing different resistances to the first transmission member 10 through the damping assembly 20.

In some embodiments, the first magnet 21 and the second magnet 22 are both annular magnets, the first part 211 and the second part 212 are each half of the first magnet 21, and the first part 211 is the N pole of the first magnet 21, and the second part 212 is the S pole of the first magnet 21; the third part 221 and the fourth part 222 are each half of the second magnet 22, and the third part 221 is the S pole of the second magnet 22, and the fourth part 222 is the N pole of the second magnet 22.

According to some embodiments of the present application, reference is made to FIGs. 2 and 3, where FIG. 2 is a schematic top view of the pressing roller 40 provided by some embodiments of the present application and a damping device 100 disposed beside the pressing roller, and FIG. 3 is a schematic cross-sectional view of the damping device 100 provided by some embodiments of the present application.

In some embodiments of the present application, the damping device 100 further includes a second transmission member 30 that is drivingly connected to the first transmission member 10, and the second transmission member 30 is drivingly connected to the pressing roller 40.

The second transmission member 30 refers to a structure in the damping device 100 that is connected to the first transmission member 10 and is drivingly connected to the pressing roller 40. In this case, the first transmission member 10 is indirectly and drivingly connected to the pressing roller 40 through the second transmission member 30. The material of the second transmission member 30 can be plastic, metal or other materials.

The second transmission member 30 can be directly connected to the pressing roller 40; for example, the second transmission member 30 can directly abut against the pressing roller 40, so that the rotation of the pressing roller 40 can drive the second transmission member 30 to rotate along with it through friction, and in this case the second transmission member 30 can be a friction wheel or other wheel-shaped structures; and also for example, the second transmission member 30 can also be a gear, and in this case a corresponding gear can be disposed on the pressing roller 40 to enable the pressing roller 40 to drive the second transmission member 30 to rotate.

Since the first transmission member 10 is indirectly connected to the pressing roller 40 through the second transmission member 30, the shape of the first transmission member 10 can be circular, annular, square, triangular or other shapes; the first transmission member 10 can be directly connected to the second transmission member 30 through a rotating shaft, or it can be connected to the second transmission member 30 through a coupling or other members. The first transmission member 10 can also be connected to the second transmission member 30 through a gear set, a connecting rod structure or other structures.

Since the first transmission member 10 needs to be resisted by the damping assembly 20, if the first transmission member 10 is directly connected to the pressing roller 40, the mounting space of the damping assembly 20 will be small due to the influence of the first transmission member 10 and the pressing roller 40, and it will be difficult to provide the damping assembly 20. By indirectly connecting the first transmission member 10 and the pressing roller 40 through the second transmission member 30, a larger mounting space can be provided for the damping assembly 20, thereby reducing the difficulty of mounting and design.

In this embodiment, the first transmission member 10 is drivingly connected to the pressing roller 40 via the second transmission member 30, which facilitates the layout of the structure and alleviates problems such as the narrow mounting space caused by the first transmission member 10 being directly connected to the pressing roller 40.

Referring to FIG. 3, in some embodiments, the second transmission member 30 abuts against the pressing roller 40 and can rotate along with the pressing roller 40 by friction.

The pressing roller 40 can drive the second transmission member 30 to rotate through friction. Therefore, friction textures and the like structures can be provided on the surface of the second transmission member 30 that contacts the pressing roller 40 to increase the friction between the second transmission member 30 and the pressing roller 40 and reduce the occurrence of running idle and slipping.

The pressing roller 40 drives the second transmission member 30 to rotate through friction, and there is rolling friction between the pressing roller 40 and the second transmission member 30. This arrangement can protect the pressing roller 40 and the electrode plate 50. For example, when the rotational speed of the second transmission member 30 changes abruptly, the second transmission member 30 can slide relative to the pressing roller 40 to reduce the sudden change in the rotational speed of the pressing roller 40 caused by the influence of the second transmission member 30. This reduces the occurrence of sudden changes in the load on the pressing roller 40 and also reduces the occurrence of sudden changes in resistance on the electrode plate 50, thereby improving the service life and stability of the pressing roller 40 and reducing the negative impact that the damping device 100 may have on the electrode plate 50.

In this embodiment, the second transmission member 30 abuts against the pressing roller 40, so that the pressing roller 40 drives the second transmission member 30 to rotate through friction. Compared with gear transmission and the like manners, friction transmission can provide buffering for the damping device 100 and the pressing roller 40, so as to reduce the negative impact that may be caused by the sudden increase in load due to the sudden change in resistance applied on the first transmission member 10.

Referring to FIG. 3, in some embodiments, the second transmission member 30 includes a base 31 and a damping member 32 disposed around the base 31, the base 31 being connected to the first transmission member 10, and the damping member 32 abutting against the pressing roller 40 and being capable of rotating with the pressing roller 40 by friction.

The base 31 refers to a structure in the second transmission member 30 that provides a fixing foundation for other structures. The base 31 can be connected to the first transmission member 10 so that the rotation of the second transmission member 30 can drive the first transmission member 10 to rotate. The base 31 can be made of plastic, metal or other materials.

The damping member 32 is arranged around the base 31. The damping structure can be an annular member and sleeved outside the base 31. The damping structure can also include multiple arc-shaped or strip-shaped members and are arranged at intervals along the circumferential direction of the second transmission member 30. The material of the damping member 32 can be asbestos friction material, semi-metallic friction material or other materials with a high coefficient of friction.

The damping member 32 can be fixedly connected to the base 31, for example by adhesive, bolt connection or the like manners; and the damping member 32 can also be detachably connected to the base 31, for example by snap-fit, interference fit or the like manners.

This embodiment provides some specific structures for the second transmission member 30, so that the second transmission member 30 is connected to the first transmission member 10 through the base 31 and connected to the pressing roller 40 through the damping member 32; since the damping member 32 is connected to the pressing roller 40 through friction, this arrangement easily leads to a short life of the damping member 32. The second transmission member 30 includes the base 31 and the damping member 32, so that the damping member 32 can be replaced separately, thereby improving the overall life of the damping device 100.

In some embodiments, the damping member 32 is made of at least one of a rubber-based material, a carbon fiber material, a resin-based material, or a semi-metallic material.

The rubber-based material is a type of polymer composite material with excellent elasticity and reversible deformation capability. Specifically, the rubber-based material can be butyl rubber (IIR), chlorosulfonated polyethylene rubber (CSM), or other rubber-based materials. Because the rubber-based material is elastic, the material of the damping member 32 including rubber allows the damping member 32 to abut against pressing roller 40 and deform, so that the damping architecture can increase the friction between itself and the pressing roller 40 through the restoring force of the rubber, thereby reducing the occurrence of slippage of the second transmission member 30 relative to pressing roller 40.

The carbon fiber material is a high-molecular fiber raw material containing carbon elements. It has properties such as high strength, high rigidity, wear resistance, high temperature resistance, and fatigue resistance. The carbon fiber material can increase the friction coefficient of the damping member 32 and increase the service life of the damping member 32.

The resin-based material is a composite material with resin as the matrix, which has high strength, high rigidity, wear resistance, high temperature resistance, fatigue resistance, and the like properties. The resin-based material can increase the friction coefficient of the damping member 32 and increase the service life of the damping member 32.

The semi-metallic material refers to a material that has both metallic and non-metallic properties. For example, it can include ferrous metals (such as steel fibers, reduced iron powder, foamed iron powder, etc.). The semi-metallic material has properties such as high strength, good heat resistance, high power absorption per unit area, and high thermal conductivity, which can increase the service life of the damping member 32.

This embodiment provides some specific materials for the damping member 32, so that there can be a large frictional force between the damping member 32 and the pressing roller 40, thereby enabling the damping member 32 to rotate synchronously with the pressing roller 40 better, and the sliding friction between the damping member 32 and the pressing roller 40 can be reduced.

Referring to FIGs. 2 and 3, in some embodiments, the dimension of the contact face between the second transmission member 30 and the pressing roller 40 in the axial direction of the pressing roller 40 ranges from 3 millimeters (mm)-20 mm. Specifically, the dimension can be 3 mm, 5 mm, 7 mm, 10 mm, 12 mm, 15 mm, 18 mm, 20 mm or other values.

The contact face between the second transmission member 30 and the pressing roller 40 refers to a surface of the second transmission member 30 facing the pressing roller 40 and capable of contacting the pressing roller 40. The dimension of the surface along the axial direction of the pressing roller 40 is the dimension shown by H in FIG. 2. The dimension of the contact face between the second transmission member 30 and the pressing roller 40 along the axial direction of the pressing roller 40 is positively correlated with the contact area between the second transmission member 30 and the pressing roller 40. According to the structure of the second transmission member 30, the dimension of the contact face between the second transmission member 30 and the pressing roller 40 along the axial direction of the pressing roller 40 can refer to the dimension of the damping member 32 along the axial direction of the pressing roller 40, that is, the width of the damping member 32, which is also the dimension shown by H in FIG. 3.

By making the dimension of the contact face between the second transmission member 30 and the pressing roller 40 along the axial direction of the pressing roller 40 within the range of 3mm-20 mm, a larger contact area can be achieved between the second transmission member 30 and the pressing roller 40, so as to reduce the concentration of a pressure from the second transmission member 30 on the pressing roller 40, thereby reducing the negative impact that the second transmission member 30 may have on the pressing roller 40. At the same time, it also allows the second transmission member 30 to abut against the pressing roller 40 more stably. Meanwhile, this dimension range can also reduce the overall width of the second transmission member 30, thereby reducing the space occupied by the second transmission member 30 and reducing the overall volume and weight of the damping device 100.

This embodiment provides a width range for the second transmission member 30, so that the second transmission member 30 can better provide resistance to the pressing roller 40, while also reducing the space requirement of the second transmission member 30, thereby reducing the overall volume and weight of the damping device 100.

According to some embodiments of the present application, and referring to FIG 3, FIG. 3 is a schematic cross-sectional view of a damping device 100 provided by some embodiments of the present application.

In some embodiments of the present application, the damping device 100 further includes a case 23, the second transmission member 30 is disposed outside the case 23, and the first transmission member 10 and the damping structure are accommodated within the case 23.

The case 23 refers to a structure in the damping device 100 that provides a fixing foundation for other structures. The case 23 is used for providing a fixing foundation for the first transmission member 10, the second transmission member 30, the damping assembly 20, and other structures. The case 23 can be cuboid, cylindrical, or other shapes. The material of the case 23 can include plastic, metal, or other materials.

The case 23 is provided with an accommodating space therein, and the first transmission member 10 and the damping structure are accommodated in the accommodating space inside the case 23 to protect the first transmission member 10 and the damping structure. The second transmission member 30 is disposed outside the case 23 to facilitate the connection of the second transmission member 30 to the pressing roller 40. The first transmission member 10 can be connected to the second transmission member 30 through a rotating shaft, coupling or other structures, in which case one end of the rotating shaft, coupling or other structures is inside the accommodating space and the other end extends outside the accommodating space.

In this embodiment, the damping device 100 further includes a case 23. The case 23 accommodates the first transmission member 10 and the damping structure to play a role on the first transmission member 10 and the damping structure; at the same time, the second transmission member 30 is located outside the case 23, so that the second transmission member 30 is drivingly connected to the pressing roller 40.

According to some embodiments of the present application, referring to FIG. 1, FIG. 1 is a schematic top view of an electrode plate flattening device 200 provided by some embodiments of the present application;

In some embodiments of the present application, the electrode plate flattening device 200 includes at least one of the pressing rollers 40, and at least one of the damping devices 100 is capable of being disposed on the periphery of any one of the pressing rollers 40.

The number of the pressing rollers 40 can be one, two or more, and the pressing rollers 40 can be disposed on any side of the electrode plate 50 as desired. The damping device 100 can be disposed on one side of any pressing roller 40 as desired, or the damping device 100 can be disposed beside multiple pressing rollers 40. According to the required resistance of the pressing roller 40, one damping device 100 or two or more damping devices 100 can be disposed beside the pressing roller 40.

In this embodiment, the damping device 100 can be disposed beside any pressing roller 40 as desired, or the damping devices can be disposed beside several pressing rollers 40 respectively; and at the same time, only one damping device 100 or multiple damping devices 100 can be disposed beside each pressing roller 40 to adapt to different needs under different working conditions.

According to some embodiments of the present application, referring to FIG. 4, FIG. 4 is a schematic perspective view of a bracket in the damping device 100 provided by some embodiments of the present application.

In some embodiments of the present application, the damping device 100 further includes a bracket 24. The bracket 24 is detachably disposed beside any of the pressing rollers 40.

The bracket 24 refers to a structure in the damping device 100 that provides a fixing foundation for the damping assembly 20; the bracket 24 may include a columnar structure, a frame structure or other structures; and the material of the bracket 24 may be plastic, metal or other materials.

The bracket 24 is detachably disposed beside any pressing roller 40 so that the damping device 100 can be mounted beside the pressing roller 40 by a worker as desired. The detachable connection of the bracket 24 can be achieved by bolt connection, snap-fit connection or other connection manners. The bracket 24 can be mounted on the frame of the electrode plate flattening device 200, or on the frame of the pressing roller 40 or other structural members.

In this embodiment, the damping device 100 can be detachably disposed beside any pressing roller 40 via a bracket 24, so that a worker can change the position of the damping device 100 according to the actual working conditions, thereby improving the flexibility in use of the damping device 100 and also reducing the cost.

In some embodiments, the electrode plate flattening device 200 is disposed after the cold pressing procedure of the electrode plate 50, the pressing roller 40 is disposed at the exit of the cold pressing procedure, and there are two damping devices 100 disposed on both sides of the pressing roller 40 respectively to apply resistance to the pressing roller 40; the damping structure in the second transmission member 30 of the damping device 100 is mainly made of a carbon fiber material; the dimension of the damping structure in the axial direction of the pressing roller 40 is 8 mm; the sectional shape of the damping structure along the radial direction of the second transmission member 30 is a rounded rectangle; and the first magnet 21 in the damping device 100 has at least nine different rotational positions so that the damping device 100 can provide at least nine different resistances to the pressing roller 40.

The substrate of the electrode plate 50 passing through the electrode plate flattening device 200 is a copper foil with a thickness of 6 micrometers (um).

In a second aspect, some embodiments of the present application further provide an electrode plate coating device for coating an active material onto a current collector of an electrode plate 50. The electrode plate coating device may include a pressing roller 40. The pressing roller 40 is used for flattening the active material coated on the electrode plate 50 and flatten the blank region 51. The pressing roller 40 is a passive roller and a roller that moves synchronously with the travel of the electrode plate 50. The pressing roller 40 is used for enabling the active material to be distributed evenly and flatly, and is also used for reducing wrinkles in the blank region 51.

In some embodiments of the present application, the electrode plate coating device includes the damping device 100 and the pressing roller 40 provided by some embodiments of the first aspect. The pressing roller 40 can press on the electrode plate 50, and the pressing roller 40 can rotate along with the displacement of the electrode plate 50. The damping device 100 includes a first transmission member 10 and a damping assembly 20, the first transmission member 10 can rotate along with the pressing roller 40; the damping assembly 20 is disposed beside the first transmission member 10, and the damping assembly 20 can apply resistance to the first transmission member 10.

Similar to the electrode plate flattening device 200 provided in some embodiments of the first aspect, the pressing roller 40 can rotate along with the displacement of the electrode plate 50; the damping device 100 is disposed on one side of the pressing roller 40, and the rotation of the pressing roller 40 can drive the first transmission member 10 of the damping device 100 to rotate; the damping device 100 can apply resistance to the first transmission member 10 to reduce the rotational speed of the first transmission member 10, thereby reducing the rotational speed of the pressing roller 40; the reduction in the rotational speed of the pressing roller 40 causes the pressing roller 40 to generate a relative motion opposite to the traveling direction of the electrode plate 50, and generates a force opposite to the movement direction of the electrode plate 50, so as to reduce the traveling speed of the electrode plate 50.

When the pressing roller 40 is displaced or skewed, or when the electrode plate 50 is skewed or wrinkled, the damping device 100 is activated and causes the pressing roller 40 to move and exert a force in a direction opposite to the traveling direction of the electrode plate 50. This movement has a component movement perpendicular to the direction of the electrode plate 50, which stretches the electrode plate 50 and flattens the wrinkles. Another component movement of this movement can drive the electrode plate 50 to move, so as to alleviate the displacement or skewing of the electrode plate 50. The force has a component force perpendicular to the direction of the electrode plate 50, which can stretch the electrode plate 50 to alleviate the wrinkles of the electrode plate 50 and flattens the wrinkles of the electrode plate 50. Another component force of this force can drive the electrode plate 50 to move, so as to alleviate the displacement problem of the electrode plate 50 and correct the position of the electrode plate 50.

In some embodiments, the electrode plate coating device includes at least one of the pressing rollers 40, and at least one of the damping devices 100 is capable of being disposed on the periphery of any one of the pressing rollers 40.

Similar to the electrode plate flattening device 200 provided in some embodiments of the first aspect, the number of the pressing rollers 40 can be one, two or more, and the pressing rollers 40 can be disposed on any side of the electrode plate 50 as desired. The damping device 100 can be disposed on one side of any pressing roller 40 as desired, or the damping device 100 can be disposed beside multiple pressing rollers 40. According to the required resistance of the pressing roller 40, one damping device 100 or two or more damping devices 100 can be disposed beside the pressing roller 40.

In this embodiment, the damping device 100 can be disposed beside any pressing roller 40 as desired, or the damping devices can be disposed beside several pressing rollers 40 respectively; and at the same time, only one damping device 100 or multiple damping devices 100 can be disposed beside each pressing roller 40 to adapt to different needs under different working conditions.

In some embodiments, the damping device 100 further includes a bracket 24. The bracket 24 is detachably disposed beside any of the pressing rollers 40.

Similar to the electrode plate flattening device 200 provided in some embodiments of the first aspect, the bracket 24 is detachably disposed beside any pressing roller 40 so that the damping device 100 can be mounted beside the pressing roller 40 by a worker as desired. The detachable connection of the bracket 24 can be achieved by bolt connection, snap-fit connection or other connection manners. The bracket 24 can be mounted on the frame of the electrode plate coating device, or on the frame of the pressing roller 40 or other structural members.

In this embodiment, the damping device 100 can be detachably disposed beside any pressing roller 40 via a bracket 24, so that a worker can change the position of the damping device 100 according to the actual working conditions, thereby improving the flexibility in use of the damping device 100 and also reducing the cost.

In some embodiments, one pressing roller 40 is disposed beside an outlet of an oven of the electrode plate coating device, and one damping device 100 is disposed beside the pressing roller 40 and can apply resistance to the pressing roller 40; the damping structure in the second transmission member 30 of the damping device 100 is mainly made of a resin-based material; the dimension of the damping structure in the axial direction of the pressing roller 40 is 5 mm; the sectional shape of the damping structure along the radial direction of the second transmission member 30 is a right-angled rectangle; and the first magnet 21 in the damping device 100 has at least nine different rotational positions so that the damping device 100 can provide at least nine different resistances to the pressing roller 40.

The substrate of the electrode plate 50 coated on the electrode plate coating device is a copper foil with a thickness of 5 micrometers (um).

Finally, it should be noted that the aforementioned embodiments are only used for explaining the technical solution of the present application, and not for limiting the present application. Although the present application has been described in detail with reference to the aforementioned embodiments, it should understand by those of ordinary skills in the art that the technical solutions described in the aforementioned embodiments can still be modified, or some or all of the technical features can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. An electrode plate flattening device, comprising:
a pressing roller capable of being pressed on an electrode plate and capable of rotating along with the displacement of the electrode plate; and
a damping device comprising a first transmission member and a damping assembly;
wherein the first transmission member is capable of rotating along with the pressing roller; the damping assembly is disposed beside the first transmission member, and the damping assembly is capable of applying resistance to the first transmission member.

2. The electrode plate flattening device according to claim 1, wherein the damping assembly comprises at least two different states to apply resistances of different magnitudes to the first transmission member.

3. The electrode plate flattening device according to claim 1 or 2, wherein the material of the first transmission member comprises a magnetically conductive material, and the damping assembly is capable of forming a magnetic field around the first transmission member; and
the rotation of the first transmission member in the magnetic field is capable of forming a closed current inside the first transmission member.

4. The electrode plate flattening device according to claim 3, wherein the first transmission member comprises an annular member, so that the rotation of the first transmission member in the magnetic field is capable of forming an annular closed current inside the first transmission member.

5. The electrode plate flattening device according to claim 3 or 4, wherein the damping assembly comprises a first magnet and a second magnet disposed on two opposite sides of the first transmission member, and the first magnet is movable relative to the second magnet.

6. The electrode plate flattening device according to claim 5, wherein the first magnet is rotatable relative to the second magnet, and the first magnet has different magnetic poles in a circumferential direction of a rotation axis thereof, so as to change the projection areas of the different magnetic poles of the first magnet on the opposite magnetic poles of the second magnet.

7. The electrode plate flattening device according to claim 6, wherein the first magnet comprises a first part and a second part with different magnetic properties, the second magnet comprises a third part and a fourth part with different magnetic properties, and the third part and the first part have different magnetic properties;
along the circumferential direction of the rotation axis of the first magnet, the first part and the second part are sequentially arranged, and the third part and the fourth part are sequentially arranged.

8. The electrode plate flattening device according to any one of claims 1-7, wherein the damping device further comprises a second transmission member that is drivingly connected to the first transmission member, and the second transmission member is drivingly connected to the pressing roller.

9. The electrode plate flattening device according to claim 8, wherein the second transmission member abuts against the pressing roller and is capable of rotating with the pressing roller by friction.

10. The electrode plate flattening device according to claim 9, wherein the second transmission member comprises a base and a damping member disposed around the base, the base being connected to the first transmission member, and the damping member abutting against the pressing roller and being capable of rotating with the pressing roller by friction.

11. The electrode plate flattening device according to claim 9 or 10, wherein the damping member is made of at least one of a rubber-based material, a carbon fiber material, a resin-based material or a semi-metallic material.

12. The electrode plate flattening device according to any one of claims 9-11, wherein in an axial direction of the pressing roller, a dimension range of a contact face between the second transmission member and the pressing roller is 3 mm-20 mm.

13. The electrode plate flattening device according to any one of claims 9-12, wherein the damping device further comprises a case, the second transmission member is disposed outside the case, and the first transmission member and the damping structure are accommodated within the case.

14. The electrode plate flattening device according to any one of claims 1-13, wherein the electrode plate flattening device comprises at least one of the pressing rollers, and at least one of the damping devices is capable of being disposed on the periphery of any one of the pressing rollers.

15. The electrode plate flattening device according to any one of claims 1-14, wherein the damping device further comprises a bracket that is detachably disposed beside any one of the pressing rollers.

16. An electrode plate coating device, comprising:
a pressing roller capable of being pressed on an electrode plate and capable of rotating along with the displacement of the electrode plate;
a first transmission member capable of rotating along with the pressing roller;
a damping assembly that is disposed beside the first transmission member and capable of applying resistance to the first transmission member.
